# EUROPÄISCHE PATENTANMELDUNG

(11) **EP 4 485 867 A1**
(43) Veröffentlichungstag der Anmeldung: **01.01.2025**
(21) Anmeldenummer: 24180750.2
(22) Anmeldetag: 07.06.2024
(51) Int. Cl.: H04L 12/28

(54) **VERFAHREN UND STEUEREINHEIT ZUM ÜBERTRAGEN VON BENUTZERSCHNITTSTELLENDATEN VON EINEM HAUSGERÄT AN EIN MOBILGERÄT UND ZUM TRANSFERIEREN VON BENUTZERSCHNITTSTELLENDATEN VON EINEM HAUSGERÄT AN EINE ANZEIGEEINHEIT SOWIE HAUSGERÄT**

(30) Priorität: 28.06.2023 BE 202305529
(71) Anmelder: Miele & Cie. KG, 33332 Gütersloh (DE)
(72) Erfinder: Carsten, Daniel, 33615 Bielefeld (DE)

(57) **Zusammenfassung**

Die Erfindung betrifft ein Verfahren (500) zum Übertragen von Benutzerschnittstellendaten (105) von einem Hausgerät (125) an ein Mobilgerät (115) eines Nutzers (100), wobei das Verfahren (500) den Schritt des Ausgebens (510) der Benutzerschnittstellendaten (105) an das Mobilgerät (115) umfasst, wobei die Benutzerschnittstellendaten (105) zumindest eine Betriebsinformation des Hausgerätes (125) und/oder eine Information über eine Anordnung von auf einer Anzeigeeinheit (210) anzuzeigenden Symbolen repräsentiert, um die Benutzerschnittstellendaten (105) von dem Hausgerät (125) an das Mobilgerät (115) zu übertragen.

## Beschreibung

Die Erfindung betrifft ein Verfahren und eine Steuereinheit zum Übertragen von Benutzerschnittstellendaten von einem Hausgerät an ein Mobilgerät eines Nutzers und zum Transferieren von Benutzerschnittstellendaten von einem Hausgerät an eine Anzeigeeinheit sowie ein Hausgerät gemäß den Hauptansprüchen.

Hausgeräte bieten unterschiedliche Möglichkeiten für eine Benutzerschnittstelle an, je nach Produktkategorie und Preisklasse. Eine solche Benutzerschnittstelle kann hier alternativ als User Interface oder abgekürzt UI (Ul = User Interface) bezeichnet werden. Es gibt Hausgeräte mit kleinen und großen Displays, aber auch Geräte ohne Display, zum Beispiel Kühlschränke, oder mit einem versteckten Display, das nur in bestimmten Situationen zum Vorschein kommt, beispielsweise bei einem VI-Geschirrspüler, mithin einem Geschirrspüler mit einer visuellen Schnittstelle, alternativ Visual Interface oder in abgekürzter Form VI genannt. Eine solche Variante ist jedoch nachteilhaft, da der Nutzer des Hausgerätes die benötigten oder gewünschten Informationen lediglich im näheren Umfeld des Hausgerätes erhalten kann.

Der hier vorgestellte Ansatz stellt sich die Aufgabe, ein verbessertes Hausgerät, alternativ Haushaltgerät genannt, ein verbessertes Verfahren zum Übertragen von Benutzerschnittstellendaten von einem Hausgerät an ein Mobilgerät eines Nutzers, ein verbessertes Verfahren zum Transferieren von Benutzerschnittstellendaten von einem Hausgerät an eine Anzeigeeinheit, ein verbessertes Verfahren zum Ausgeben von Benutzerschnittstellendaten über eine Anzeigeeinheit und eine entsprechende Steuereinheit zu schaffen.

Erfindungsgemäß wird diese Aufgabe durch ein Hausgerät, eine Steuereinheit und Verfahren mit den Merkmalen bzw. Schritten der Hauptansprüche gelöst. Vorteilhafte Ausgestaltungen und Weiterbildungen der Erfindung ergeben sich aus den nachfolgenden Unteransprüchen und der Beschreibung.

Der hier vorgeschlagene Ansatz schafft zur Lösung der vorstehend genannten Aufgabe ein Verfahren zum Übertragen von Benutzerschnittstellendaten von einem Hausgerät an ein Mobilgerät eines Nutzers, wobei das Verfahren den folgenden Schritt umfasst:
- Ausgeben der Benutzerschnittstellendaten an das Mobilgerät, wobei die Benutzerschnittstellendaten zumindest eine Betriebsinformation des Hausgerätes und/oder eine Information über eine Anordnung von auf einer Anzeigeeinheit anzuzeigenden Symbolen repräsentiert, um die Benutzerschnittstellendaten von dem Hausgerät an das Mobilgerät zu übertragen.

Als Benutzerschnittstellendaten können hierbei Daten einer Benutzerschnittstelle aufgefasst werden. Im dargelegten Ansatz sind hierunter beispielsweise Daten der Benutzerschnittstelle des Hausgeräts zu verstehen, wobei diese Daten auf das Mobilgerät übertragen werden sollen. Dabei können Benutzerschnittstellendaten beispielsweise Daten betreffen, wie Symbole oder Elemente optisch auf einer Anzeigeeinheit angeordnet worden sollen, sodass diese Benutzerschnittstellendaten beispielsweise ein grafisches Benutzerinterface bilden können. Alternativ oder zusätzlich können die Benutzerschnittstellendaten auch konkrete Betriebsparameter des Hausgeräts umfassen, die auf der Anzeigeeinheit angezeigt werden sollen, beispielsweise eingebettet in entsprechende Felder des Benutzerinterfaces. Als ein Betriebsparameter oder eine Betriebsinformation kann dabei eine Information zum Betrieb oder ein im Hausgerät erfasster Parameter während eines Betriebs des Geräts, im Speziellen beispielsweise ein Gerätestatus, eine Bedienungsinformation, eine Geräteanweisung, eine Handlungsanweisung, eine Bedienungsanweisung, eine Geräteinformation oder ein Bedienungsstatus oder eine physikalische Messgröße wie beispielsweise eine Temperatur in einem Innenraum oder einer Oberfläche des Hausgerätes oder beispielsweise eine Leistungsaufnahme des Hausgerätes verstanden werden. Unter einem Hausgerät kann hierbei ein in einem Haushalt eingesetztes elektrisches oder mechanisches Gerät wie beispielshalber ein Kühlschrank, eine Spülmaschine, ein Kochfeld oder eine Waschmaschine verstanden werden. Eine Anzeigeeinheit, auch Display oder smartes Display bezeichnet, kann dabei ein Gerätemonitor, ein Gerätedisplay oder ein Gerätebildschirm sein, auf welchem zum Beispiel Informationen oder Symbole wie Buchstaben oder Zahlen angezeigt werden können. Die Anzeigeeinheit kann dabei räumlich abgesetzt von dem Hausgerät angeordnet sein und beispielsweise über eine Funkverbindung mit dem Hausgerät oder dem Mobilgerät in Verbindung stehen. Unter einem Mobilgerät kann beispielsweise ein vom Nutzer getragenes Gerät, beispielsweise ein Mobiltelefon, ein Tablet-Computer oder eine Smart Watch verstanden werden, die in der Lage ist, Befehle oder Informationen zu empfangen, zu speichern oder auszugeben.

Der hier vorgestellte Ansatz basiert auf der Erkenntnis, dass besonders günstig die Benutzerschnittstellendaten an die Anzeige einer übertragen werden können, wenn beispielsweise das Mobilgerät des Nutzers als Transportmedium verwendet wird. Hierzu können die entsprechenden, auf der Anzeigeeinheit auszugebenden Daten zunächst auf das Mobilgerät übertragen werden und in einem nachfolgenden Schritt beispielsweise vom Mobilgerät auf die Anzeigeeinheit ausgeladen und dort angezeigt werden. Eine solche Vorgehensweise bietet den Vorteil, durch die Verwendung des Mobilgerätes, welches der Nutzer üblicherweise bei sich trägt, die Benutzerschnittstellendaten in unmittelbarer Nähe des Nutzers wieder ausgegeben zu können, sodass diese Benutzerschnittstellendaten auch unmittelbar im Sichtfeld des Nutzers präsentiert werden können. Es kann somit vermieden werden, eine vorbestimmte Anzeigeeinheit auswählen zu müssen, auf der die entsprechenden Benutzerschnittstellendaten ausgegeben werden, sodass der Nutzer gezwungen ist, sich immer an diese vorbestimmte Anzeigeeinheit zu bewegen, um die entsprechenden Informationen aufnehmen zu können.

Besonders vorteilhaft ist eine Ausführungsform des hier vorgeschlagenen Ansatzes, bei der im Schritt des Ausgebens die Benutzerschnittstellendaten drahtlos ausgegeben werden. Eine solche Ausführungsform bietet den Vorteil, die Benutzerschnittstellendaten schnell und einfach an die jeweilige Anzeigeeinheit übertragen zu können, an welcher oder in dessen Nähe sich der Benutzer aktuell gerade befindet. Diese Lösung hat den Vorteil, dass sie mit mobilen Geräten funktioniert, die über eine drahtlose Verbindung miteinander verbunden sind. Ein Nutzer braucht hierbei nicht darauf zu achten, dass er saubere Hände hat, um die Geräte zu bedienen. Er braucht sich also nicht darauf beschränken, beispielsweise nur zu Beginn eines Kochprozesses die Geräte zu bedienen. Zum "Spiegeln" eines Hausgeräte-UI, zum Beispiel um während eines Garprozesses eine Geräteanzeige auf dem Smartphone während eines Wartens auf ein Garzeitende mit in einen anderen Raum zu nehmen, ist dies eine komfortable Angelegenheit. Falls der Nutzer schon während des Kochprozesses kurzfristig ein Hausgeräte-Ul auf ein mobiles Endgerät bringen möchte, braucht er das mobile Endgerät nicht mit schmutzigen Händen anfassen. Der Nutzer braucht seine Hände für eine Bedienung des Hausgeräts nicht erst reinigen, da er das mobile Endgerät nicht direkt vor das Hausgerät halten braucht

Von Vorteil ist weiterhin eine Ausführungsform des hier vorgeschlagenen Ansatzes, bei der im Schritt des Ausgebens die Information zu den auf der Anzeigeeinheit anzuzeigenden Symbolen eine Information zu aktuellen Betriebsparametern des Hausgerätes repräsentiert. Eine solche Ausführungsform bietet den Vorteil, aktuelle Parameter des Hausgeräts, die beispielsweise für dessen Betrieb relevant sind und/oder eine wichtige Information liefern, zeitnah dem Nutzer in einer räumlichen Nähe anzeigen oder ausgeben zu können.

Gemäß einer weiteren Ausführungsform des hier vorgeschlagenen Ansatzes kann weiterhin ein Schritt des Empfangens einer Datenanforderung von der Anzeigeeinheit und einen Schritt des Bereitstellens zumindest eines Betriebsparameters des Hausgerätes an die Anzeigeeinheit vorgesehen sein, ansprechend auf die empfangene Datenanforderung. Eine solche Ausführungsform bietet den Vorteil, an der Anzeigeeinheit, an welche das Mobilgerät die Benutzerschnittstellendaten übertragen hat, weitere Betriebsparameter des Hausgeräts anzeigen zu können. Hierbei kann ausgenutzt werden, dass durch die Übertragung der Benutzerschnittstellendaten vom Mobilgerät an die Anzeigeeinheit bekannt ist, dass sich der Nutzer im Umfeld der Anzeigeeinheit aufhält, sodass die Anzeige oder Ausgabe der (aktuellen) Betriebsparameter des Hausgeräts an dieser Anzeigeeinheit mit hoher Wahrscheinlichkeit durch den Nutzer wahrgenommen aufgenommen werden kann. Es kann somit beispielsweise im Schritt des Anzeigens zumindest ein von dem Hausgerät ansprechend auf die Datenanforderung ausgegebener Betriebsparameter auf der Anzeigeeinheit angezeigt werden. Das Ul kann so vorteilhafterweise auf ein beliebiges vernetzbares Gerät übertragen werden, im Besonderen auf ein anderes Hausgerät oder auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Die Smart Watch wird meist bereits am Handgelenk getragen und der Nutzer kann einfach und bequem das Ul von einem Ort zu einem anderen Ort tragen. Bei mehreren Mitgliedern in einem Haushalt kann jedes Mitglied des Haushalts über jeweils ein Wearable ein Geräte-Ul zu einem anderen Display mitnehmen und übertragen.

Alternativ oder zusätzlich schafft der hier vorgeschlagene Ansatz zur Lösung der vorstehend genannten Aufgabe ein Verfahren zum Transferieren von Benutzerschnittstellendaten von einem Hausgerät an eine Anzeigeeinheit, wobei das Verfahren die folgenden Schritte aufweist.:
- Einlesen der Benutzerschnittstellendaten von dem Hausgerät in ein Mobilgerät eines Nutzers, wobei die Benutzerschnittstellendaten zumindest eine Betriebsinformation des Hausgerätes und/oder eine Information über eine Anordnung von auf der Anzeigeeinheit anzuzeigenden Symbolen repräsentiert; und
- Ausgeben der Benutzerschnittstellendaten von dem Mobilgerät an die Anzeigeeinheit, um die Benutzerschnittstellendaten von dem Hausgerät an die Anzeigeeinheit zu transferieren.

Durch eine solche Ausführungsform, die nun als Verfahren implementiert ist, welches beispielsweise im Mobilgerät ausgeführt wird, lässt sich sehr einfach ein Transport der Benutzerschnittstellendaten von dem Hausgerät zu der Anzeigeeinheit realisieren. Speziell können die Benutzerschnittstellendaten dabei an diejenige Anzeigeeinheit ausgegeben werden, die sich in einer räumlichen Nähe des Nutzers befindest, beispielsweise wenn der Nutzer sich nicht weiter als einen Meter von der Anzeigeeinheit weg befindet. Hierdurch lassen sich vorteilhaft die Benutzerschnittstellendaten über eine Anzeigeeinheit anzeigen, an der sich der Nutzer aktuell befindet, sodass der Nutzer mit hoher Wahrscheinlichkeit die in den Benutzerschnittstellendaten enthaltene Informationen aufnehmen kann.

Gemäß einer besonders günstigen Ausführungsform des hier vorgeschlagenen Ansatzes können im Schritt des Einlesens zumindest weitere Benutzerschnittstellendaten von zumindest einem weiteren Hausgerät in das Mobilgerät des Nutzers eingelesen werden, wobei die weiteren Benutzerschnittstellendaten zumindest eine Betriebsinformation des weiteren Hausgerätes und/oder eine Information über eine Anordnung von auf der Anzeigeeinheit anzuzeigenden weiteren Symbolen repräsentieren und wobei im Schritt des Ausgebens die Benutzerschnittstellendaten und/oder die weiteren Benutzerschnittstellendaten von dem Mobilgerät an die Anzeigeeinheit ausgegeben werden. Eine derartige Ausführungsform des hier vorgeschlagenen Ansatzes bietet den Vorteil, Benutzerschnittstellendaten von mehreren Hausgeräten in das Mobilgerät laden zu können und dann an der Anzeigeeinheit ausgeben zu können. Eine solche Ausführungsform bietet den Vorteil, an einer Anzeigeeinheit, der sich der Nutzer günstiger Weise aktuell gerade befindet, Informationen von mehreren Hausgeräten anzeigen zu können und somit dem Nutzer einen Überblick über den Betriebszustand und/oder mögliche aufgetretene Fehler in einem von diesen Hausgeräten schnell und einfach geben zu können.

Um einen möglichst guten Überblick zu behalten, kann gemäß einer besonders günstigen Ausführungsform des hier vorgeschlagenen Ansatzes der Nutzer über ein Ausfallsignal auswählen oder festlegen, welche Informationen von welchem Hausgerät angezeigt werden sollen. Dies kann gemäß dieser Ausführungsform dadurch erfolgen, dass im Schritt des Ausgebens ansprechend auf ein eingelesenes Auswahlsignal die Benutzerschnittstellendaten oder die weiteren Benutzerschnittstellendaten ausgegeben werden.

Besonders komfortabel für den Nutzer ist eine Ausführungsform des hier vorgeschlagenen Ansatzes, bei der im Schritt des Ausgebens die Benutzerschnittstellendaten an eine in dem Mobilgerät integrierte Anzeigeeinheit ausgegeben werden. Beispielsweise können in dieser Ausführungsform die Benutzerschnittstellendaten direkt auf dem Mobilgerät, d. h. auf einer Anzeigeeinheit des Mobilgerätes ausgegeben werden, wodurch der Nutzer die entsprechenden Informationen der einzelnen Hausgeräte einfach und schnell aufnehmen kann. Das UI kann so vorteilhafterweise auf ein beliebiges vernetzbares Gerät übertragen werden, im Besonderen auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Die Smart Watch wird meist bereits am Handgelenk getragen und der Nutzer kann einfach und bequem das UI von einem Ort zu einem anderen Ort tragen. Bei mehreren Mitgliedern in einem Haushalt kann jedes Mitglied des Haushalts über jeweils ein Wearable ein Geräte-Ul zu einem anderen Display mitnehmen und übertragen.

Denkbar ist auch eine Ausführungsform des hier vorgeschlagenen Ansatzes, bei der von der Steuereinheit ausgesandte Steuerparameter im Hausgerät eingelesen werden und eine Betriebsfunktion unter Verwendung dieser Steuerparameter angesteuert wird. Eine solche Ausführungsform bietet den Vorteil, die Steuerung des Hausgeräts durch die beispielsweise abgesetzte Anzeigeeinheit komfortabel durch den Nutzer vornehmen zu können.

Als eine weitere Möglichkeit schafft der hier vorgeschlagene Ansatz zur Lösung der vorstehend genannten Aufgabe ein Verfahren zum Ausgeben von Benutzerschnittstellendaten über eine Anzeigeeinheit, wobei das Verfahren die folgenden Schritte aufweist:
- Einlesen der Benutzerschnittstellendaten von dem Mobilgerät des Nutzers in die Anzeigeeinheit, wobei die Benutzerschnittstellendaten zumindest eine Betriebsinformation des Hausgerätes und/oder eine Information über eine Anordnung von auf der Anzeigeeinheit anzuzeigenden Symbolen repräsentiert; und
- Anzeigen der Betriebsinformation des Hausgerätes und/oder der Anordnung von anzuzeigenden Symbolen auf der Anzeigeeinheit.

Eine solche Ausführungsform bietet den Vorteil, die vom Mobilgerät des Nutzers eingelesen Benutzerschnittstellendaten Günstigerweise im unmittelbaren Umfeld des Nutzers ausgeben oder anzeigen zu können und somit den Nutzerkomfort deutlich zu erhöhen.

Ist beispielsweise durch die Übertragung der Benutzerschnittstellendaten vom Mobilgerät auf die Anzeigeeinheit festgelegt, an welcher Anzeigeeinheit tatsächlich diese Benutzerschnittstellendaten des Mobilgerätes angezeigt werden sollen, können weitere Daten wie beispielsweise entsprechende aktualisierte Betriebsparameter ebenfalls auf dieser Anzeigeeinheit dargestellt werden. Diese aktualisierten Betriebsparameter können dann beispielsweise durch eine Datenanforderungen bzw. ein Datenanforderungssignal direkt an das Hausgerät abgerufen und an der Anzeigeeinheit angezeigt werden. Demgemäß kann gemäß dieser Ausführungsform ferner ein Schritt des Ausgebens einer Datenanforderung von der Anzeigeeinheit an das Hausgerät vorgesehen sein, wobei im Schritt des Anzeigens zumindest ein von dem Hausgerät ansprechend auf die Datenanforderung ausgegebener Betriebsparameter auf der Anzeigeeinheit angezeigt wird. Eine solche Ausführungsform bietet den Vorteil, in unmittelbarer Nähe des Nutzers auch aktuelle Betriebsinformationen dem Nutzer anzeigen oder ausgeben zu können, ohne dass ein erneuter Transfer dieser Informationen unter Verwendung des Mobilgerätes erforderlich ist.

Weiterhin kann gemäß einer anderen Ausführungsform die die Anzeigeeinheit eines Hausgeräts für die Darstellung oder Ausgabe von Betriebsschnittstellendaten eines anderen Hausgeräts verwendet werden. Hierbei kann insbesondere ausgenutzt werden, dass einige Hausgeräte bereits eine große Anzeigeeinheit bzw. ein großes Display aufweisen, welches für die Ausgabe von Parametern andere Hausgeräte mitgenutzt werden kann. Gemäß dieser Ausführungsform kann somit im Schritt des Ausgebens die Betriebsinformation des Hausgerätes und/oder die Anordnung von anzuzeigenden Symbolen auf einer in einem weiteren Hausgerät integrierten Anzeigeeinheit angezeigt werden. Das UI kann so vorteilhafterweise auf ein beliebiges vernetzbares Gerät übertragen werden, im Besonderen auf ein anderes Hausgerät oder auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Die Smart Watch wird meist bereits am Handgelenk getragen und der Nutzer kann einfach und bequem das UI von einem Ort zu einem anderen Ort tragen. Bei mehreren Mitgliedern in einem Haushalt kann jedes Mitglied des Haushalts über jeweils ein Wearable ein Geräte-Ul zu einem anderen Display mitnehmen und übertragen.

Günstig ist weiterhin eine Ausführungsform des hier vorgeschlagenen Ansatzes, bei der über die Anzeigeeinheit Steuerparameter vom Nutzer aufgenommen und an das Hausgerät weitergeleitet werden, um beispielsweise das Hausgerät unter Verwendung dieser Steuerparameter zu Steuern. Eine solche Ausführungsform bietet den Vorteil, die Steuerung des Hausgeräts durch die beispielsweise abgesetzte Anzeigeeinheit komfortabel durch den Nutzer vornehmen zu können.

Ein zu vernetzendes Gerät braucht nicht in einem Display-Menü ausgewählt zu werden. Dies wäre im Kochprozess mit schmutzigen Händen ebenfalls nicht ideal.

Wearables wie zum Beispiel Smart Watches verbreiten sich immer mehr. Durch ein Tragen einer Smart Watch an einem Handgelenk ist dieses Wearable nahezu immer präsent. Auch bei schmutzigen Händen kann damit eine einfache Handgeste ausgeführt werden. Die Smart Watch an ein Hausgerät zu halten, ist intuitiv und einfach. Es erfordert im Normalfall keinen mentalen Aufwand und ist daher nutzerfreundlich. Wenn der Nutzer die Smart Watch an das Hausgerät hält, ist der Wunsch, das UI mitzunehmen, robust und einfach erkannt. Das UI kann so auf ein beliebiges vernetzbares Gerät übertragen werden, im Besonderen auf ein anderes Hausgerät oder auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Während des Kochprozesses kann man auch mit schmutzigen Händen ein Hausgeräte-Ul komfortabel auf das smarte Display holen, ohne das smarte Display selbst zum Hausgerät mitnehmen zu müssen, um es an das Hausgerät zu halten. Die Smart Watch wird meist bereits am Handgelenk getragen und der Nutzer kann einfach und bequem das UI von einem Ort zu einem anderen Ort tragen. Der Nutzer spart sich den Aufwand seine Hände waschen zu müssen, durch ein Menü zu navigieren, um ein vernetztes Gerät auszuwählen, oder ein Sprachkommando korrekt aufzusagen. Auch ein Einsatz von Sensorik zur Erkennung von Handgesten, welche insbesondere einem Wunsch einer Ul-Übertragung entsprechen sollen, fällt weg. Bei mehreren Mitgliedern in einem Haushalt kann jedes Mitglied des Haushalts über jeweils ein Wearable ein Geräte-Ul zu einem anderen Display mitnehmen und übertragen.

Der hier vorgestellte Ansatz schafft ferner eine Steuereinheit, die ausgebildet ist, um die Schritte einer Variante eines hier vorgestellten Verfahrens in entsprechenden Einheiten durchzuführen, anzusteuern bzw. umzusetzen. Auch durch diese Ausführungsvariante der Erfindung in Form einer Steuereinheit kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Gemäß einer weiteren Ausführungsform kann ein Hausgerät eine wie vorstehend beschriebene Steuereinheit oder eine der erwähnten Beschreibung ähnelnde Steuereinheit aufweisen. Auch durch diese Ausführungsvariante der Erfindung in Form einer Steuereinheit kann die der Erfindung zugrunde liegende Aufgabe schnell und effizient gelöst werden.

Alternativ kann eine zusätzliche Ausführungsform ein Verfahren zum Ausgeben von Benutzerschnittstellendaten eines Hausgeräts auf einer Anzeigeeinheit aufweisen. Hierbei umfasst das Verfahren einen Schritt des Ausgebens der Benutzerschnittstellendaten an ein Mobilgerät eines Nutzers. Dabei repräsentieren die Benutzerschnittstellendaten zumindest eine Betriebsinformation des Hausgerätes und/oder eine Information über eine Anordnung von auf der Anzeigeeinheit anzuzeigenden Symbolen. Ferner umfasst das Verfahren einen Schritt des Einlesens der Benutzerschnittstellendaten von dem Hausgerät in das Mobilgerät. Weiterhin umfasst das Verfahren einen Schritt des Ausgebens der Benutzerschnittstellendaten von dem Mobilgerät an die Anzeigeeinheit. Außerdem umfasst das Verfahren einen Schritt des Anzeigens der Betriebsinformation des Hausgerätes und/oder der Anordnung von anzuzeigenden Symbolen durch die Anzeigeeinheit.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ausführungsbeispiele der Erfindung sind in den Zeichnungen rein schematisch dargestellt und werden nachfolgend näher beschrieben. Es zeigt
Figur 1 eine schematische Darstellung eines Nutzers, der Benutzerschnittstellendaten von einer Übertragungseinheit auf ein Mobilgerät überträgt.
Figur 2 eine schematische Darstellung des Nutzers, der sich nun an einer anderen Position in dem Raum befindet, als dies in der Figur 1 dargestellt ist;
Figur 3 eine schematische Darstellung eines Raumes, in welchem der Nutzer sich an einem weiteren Hausgerät befindet
Figur 4 eine schematische Darstellung eines Mobilgerät des, welche selbst ein Display aufweist;
Figur 5 ein Ablaufdiagramm eines Ausführungsbeispiels des hier vorgestellten Verfahrens zum Übertragen von Benutzerschnittstellendaten von einem Hausgerät an ein Mobilgerät;
Figur 6 ein Ablaufdiagramm eines Ausführungsbeispiels des hier vorgestellten Verfahrens zum Transferieren von Benutzerschnittstellendaten von einem Hausgerät an eine Anzeigeeinheit; und
Figur 7 ein Ablaufdiagramm eines Ausführungsbeispiels des hier vorgestellten Verfahrens zum Ausgeben von Benutzerschnittstellendaten über eine Anzeigeeinheit.

Gleiche oder ähnliche Bezugszeichen werden in der nachfolgenden Beschreibung für gleiche oder ähnliche Elemente verwendet, wobei auf eine wiederholte Erläuterung der Funktion dieser Elemente aus Gründen der Übersichtlichkeit verzichtet wird.

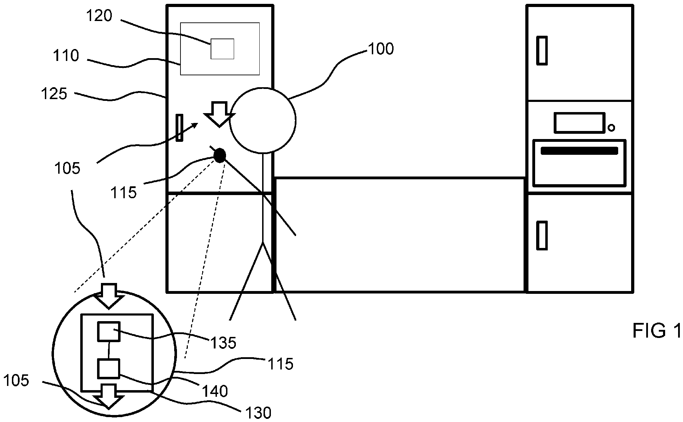

Figur 1 zeigt eine schematische Darstellung eines Nutzers 100, der Benutzerschnittstellendaten 105 von einer Übertragungseinheit 110 auf ein Mobilgerät 115 überträgt. Die Übertragungseinheit 110 umfasst hierbei eine Ausgabeeinheit 120, die ausgebildet ist, die Benutzerschnittstellendaten 105 drahtlos an das Mobilgerät 115 auszugeben. Das Mobilgerät 115 kann hierbei als Smart Watch ausgestaltet sein. Denkbar ist jedoch auch, dass das Mobilgerät 115 als Mobiltelefon oder als Tablet-Computer ausgestaltet ist. Die Benutzerschnittstellendaten 105 können hierbei eine Betriebsinformation des Hausgerätes 125 darstellen, beispielsweise eine Temperatur in einem Innenraum eines Kühlschranks als Hausgerät 115. Denkbar ist jedoch auch dass die Betriebsinformation einen aktuellen Stromverbrauch, eine Menge und/oder Typen von in dem Hausgerät gelagerten Lebensmitteln oder allgemein eine andere Information darstellt, die für eine praktische Nutzung des Hausgerätes 125 relevant ist. Denkbar ist aber auch, dass die Benutzerschnittstellendaten eine Anordnung von auf einer Anzeigeeinheit anzuzeigenden Symbolen repräsentiert. Hierbei können beispielsweise die Benutzerschnittstellendaten den Aufbau oder die grafische Anordnung von Feldern oder Elementen darstellen, die auf einem Display der Anzeigeeinheit ausgegeben werden sollen. Diese Weise kann von der Übertragungseinheit 110 des Hausgeräts 125 auch die Grafik oder das Aussehen einer Benutzerschnittstelle, beispielsweise entsprechend einer Website, vorgegeben in das Mobilgerät 115 getragen werden.

In der Darstellung links unten aus Figur 1 ist schematisch der Aufbau des Mobilgerätes 115 näher dargestellt. Das Mobilgerät 115 umfasst hierbei eine Transfereinheit 130 mit einer eine Einleseschnittstelle 135, die ausgebildet ist, um die Benutzerschnittstellendaten 105 von der Übertragungseinheit 110 des Hausgerätes 125 einzulesen und zwischen zu speichern. Weiterhin umfasst die Transfereinheit 130 eine Daten Ausgabeeinheit 140, über welche die gespeicherten Benutzerschnittstellendaten 105 nachfolgend an eine Anzeigeeinheit ausgegeben werden können, um die Informationen aus den Benutzerschnittstellendaten 105 dann an dieser Anzeigeeinheit anzeigen zu können.

Denkbar ist weiterhin, dass auch mittels der Ausgabeeinheit 115 vom Nutzer 100 Steuerparameter 240 eingelesen und an die Übertragungseinheit 110 gesendet werden können, wobei diese Übertragungseinheit 210 dann auch ausgebildet sein kann, um das Hausgerät 115 unter Verwendung dieser Steuerparameter 240 zu Steuern. Auf diese Weise lässt sich der hier vorgestellte Ansatz auch zur entfernten Bedienung oder Steuerung des Hausgerätes 125 verwenden, sodass beispielsweise der Nutzer 110 nicht mehr zurück zum Hausgerät 115 gehen muss, um die entsprechenden Steuerparameter 240 dann unmittelbar am Hausgerät 215 einzustellen.

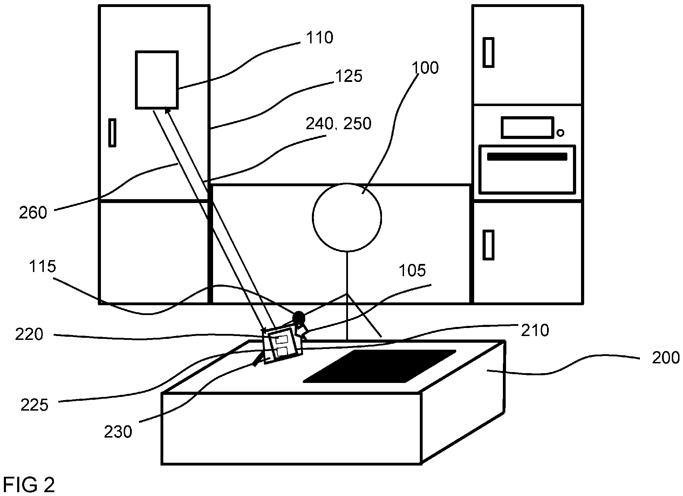

Figur 2 zeigt eine schematische Darstellung des Nutzers 100, der sich nun an einer anderen Position in dem Raum befindet, als dies in der Figur 1 dargestellt ist. In dem in der Figur 2 dargestellten Fall befindet sich nun der Nutzer 100 beispielsweise an einem Herd 200, auf welchem eine Anzeigeeinheit 210 steht, die beispielsweise als Tablet oder als andere Displayeinheit ausgebildet ist. Die Anzeigeeinheit 210 umfasst dabei eine Ausgabeeinheit 215 mit einer Einleseschnittstelle 220 zum Einlesen der Benutzerschnittstellendaten 105 vom Mobilgerät 115 des Nutzers 101 Ansteuereinheit 224 zum Ansteuern eines Displays 230, um die Betriebsinformation des Hausgerätes 124 und/oder die Anordnung von anzuzeigenden Symbolen auf der Anzeigeeinheit 210 bzw. auf dem Display 230 dieser Anzeigeeinheit 210 anzuzeigen oder auszugeben.

Ferner kann auch ein neben einem solchen Steuerparameter 240 ein Anforderungssignal 250 an die Übertragungseinheit 110 ausgegeben werden. Mit diesem Anforderungssignal 250 können beispielsweise aktualisierte Betriebsparameter 260 von der Übertragungseinheit 110 direkt in die Ausgabeeinheit 215 übertragen Bezuges abgerufen werden, wobei diese aktuelle Sittenbetriebsparameter beispielsweise eine aktuelle Temperatur in einem Innenraum des Hausgerät 115 oder dergleichen darstellen. Auf diese Weise lassen sich nun sehr komfortabel die entsprechenden Daten aus dem Hausgerät 115 auf der Anzeigeeinheit 210 darstellen, wobei sich dann der Nutzer 110 auch im unmittelbaren Umfeld dieser Anzeigeeinheit 210 befindet, da er die Benutzerschnittstellendaten 105 von seinem Mobilgerät 115 auf die Anzeigeeinheit 210 übertragen hat. Durch diese Übertragung ist dann auch bekannt, wo sich der Nutzer 100 aktuell gerade befindet und auf welchem Gerät auch die entsprechenden Betriebsinformationen oder Parameter des Hausgeräts 215 angezeigt werden sollen, damit der Nutzer 100 diese bequem und komfortabel erkennen oder aufnehmen kann.

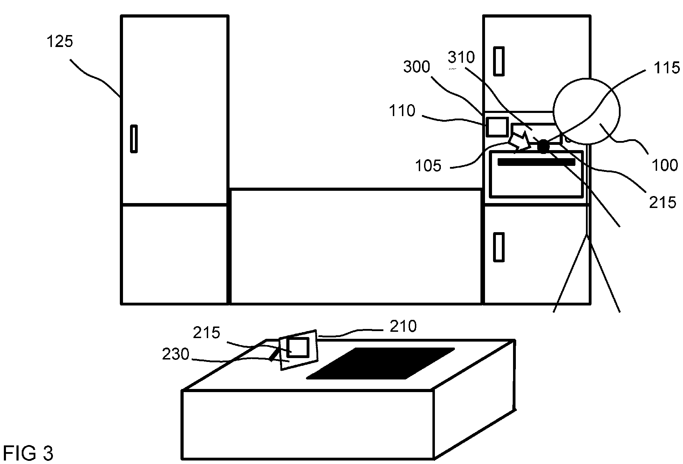

Figur 3 zeigt nun eine schematische Darstellung eines Raumes, in welchem der Nutzer 100 sich an einem weiteren Hausgerät 300 befindet, dass beispielsweise als Backofen oder Mikrowelle ausgestaltet ist. Hierbei kann das weitere Hausgerät 300 ebenfalls wieder eine Übertragungseinheit 110 entsprechend der Beschreibung aus zu Figur 1 aufweisen, die ausgebildet ist, um weitere Benutzerschnittstellendaten 105' auf das Mobilgerät 115 des Nutzers 100 zu übertragen. Die weiteren Benutzerschnittstellendaten 105' können dabei eine Betriebsinformationen des weiteren Hausgeräts 300 und/oder eine Information über eine Anordnung von auf der Anzeigeeinheit anzuzeigenden weiteren Symbolen repräsentieren, die speziell für die Ausgabe von Betriebsinformationen des weiteren Hausgeräts 300 relevant sind. Der Nutzer 100 kann sich nun ebenfalls wieder zu der Anzeigeeinheit 110 bewegen und dort beispielsweise entsprechend der mit Bezug zur Figur 2 beschriebenen Vorgehensweise die weiteren Benutzerschnittstellendaten 105' in die Ausgabeeinheit 215 übertragen und sich nachfolgend die weiteren Benutzerschnittstellendaten 105' auf dem Display 230 anzeigen zu lassen. Auf diese Weise kann sich der Benutzer 100 entsprechende Betriebsinformationen des Hausgerät 124 und/oder des weiteren Hausgerät 300 anzeigen lassen. Hierbei kann möglicherweise auch eine Auswahl von entsprechenden Daten erfolgen, die der Nutzer 100 ein von seinem Mobilgerät auf die Ausgabeeinheit 115 übertragen möchte, wobei diese Auswahl beispielsweise unter Verwendung eines entsprechenden Auswahlsignals vorgenommen werden kann, die dann die entsprechenden Benutzerschnittstellendaten 105 von dem Mobiltelefon 115 an die Ausgabeeinheit 115 überträgt damit diese Benutzerschnittstellendaten 105 auf dem Display 130 angezeigt werden können.

Denkbar ist jedoch auch, dass das weitere Hausgerät 300 selbst ein Display 310 aufweist, über welches beispielsweise auch die vom Hausgerät 125 stammenden Benutzerschnittstellendaten 105, die auf dem Mobilgerät 115 des Nutzers 100 gespeichert sind, ausgegeben werden können. Hierzu kann dann beispielsweise auch im weiteren Hausgerät 300 eine entsprechende Ausgabeeinheit 215 vorgesehen sein, in die dann entsprechend der mit Bezug zur Figur 2 dargestellten bzw. beschriebenen Vorgehensweise Mobilgerät 115 des Nutzers 100 gespeicherten Benutzerschnittstellendaten 105 übertragen und auf dem Display 310 des weiteren Hausgeräts 300 angezeigt werden können. Auf diese Weise lässt sich auch das Display 310 des weiteren Hausgerät 300 zur Darstellung von Informationen des Hausgerät 125 verwenden, wenn auch hier festgestellt wird, dass sich der Nutzer 100 aktuell gerade im Bereich des weiteren Hausgerät 300 befindet.

Mit der hier nun beschriebenen Vorgehensweise lässt sich eine deutliche Erhöhung des Nutzerkomfort erreichen, da sich entsprechende Informationen und/oder eine Darstellung einer Benutzerschnittstelle direkten Umfeld des Nutzers 100 anzeigen lassen. Der Nutzer 100 muss somit nicht direkt an das betreffende Hausgerät gehen, um die Informationen zu erhalten, sondern er kann diese Informationen auch an entfernten Positionen abrufen oder erhalten, je nachdem wo er sich gerade in seiner Wohnung befindet.

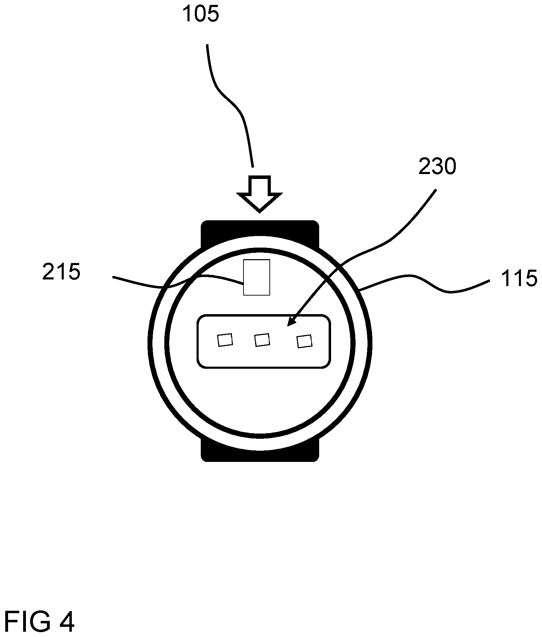

Figur 4 zeigt eine schematische Darstellung eines Mobilgerät des 115, welche selbst ein Display 230 aufweist, über welches die Ausgabeeinheit 215 die entsprechenden erhaltenen Benutzerschnittstellendaten 115 anzeigen oder ausgeben kann. Nachdem der Nutzer 100 das Mobilgerät 115 oftmals ständig bei sich trägt, insbesondere wenn es sich bei dem Mobilgerät 115, wie in der Figur 4 dargestellt, um eine intelligente Uhr handelt, lassen sich die entsprechenden Informationen des Hausgeräts 125 oder der Hausgeräte 125, 300 sehr einfach und komfortabel von dem Nutzer 100 ablesen.

Gemäß dem hier vorgestellten Ansatz kann der Nutzer zum Beispiel ein mobiles Endgerät, beispielsweise ein Smartphone oder ein Tablet, an ein Hausgerät halten, um ein UI des Hausgerätes auf eben diesem mobilen Endgerät zu "spiegeln". Das mobile Endgerät sollte daher zum einen mobil sein und kann zum anderen ein hinreichend großes Display besitzen, so dass das III des Hausgerätes darauf beispielsweise zufriedenstellend groß angezeigt werden kann, um es bedienen zu können. Der Nutzer wird dies daher in der Regel bevorzugterweise mit sauberen Händen, meist zu Beginn eines Kochprozesses durchführen. Zum "Spiegeln" eines Hausgeräte-UI, zum Beispiel um während eines Garprozesses eine Geräteanzeige auf dem Smartphone während eines Wartens auf ein Garzeitende mit in einen anderen Raum zu nehmen, ist dies eine komfortable Angelegenheit. Falls der Nutzer aber schon während des Kochprozesses kurzfristig ein Hausgeräte-Ul auf das mobile Endgerät bringen möchte, würde er das mobile Endgerät womöglich mit schmutzigen Händen anfassen. Andernfalls könnte der Nutzer seine Hände erst reinigen und dann das mobile Endgerät vor das Hausgerät halten.

In einem möglichen Ansatz lässt sich ein zu vernetzendes Gerät in einem Display-Menü auswählen. Dies ist im Kochprozess mit schmutzigen Händen ebenfalls nicht ideal. Ein Aufrufen eines Hausgeräte-Ul auf einem anderen Gerätedisplay mittels einer Sprachbedienung erfordert einen mentalen Aufwand, um genau zu beschreiben, welches Hausgeräte-Ul auf welchem Gerätedisplay angezeigt werden soll. Auch ist nicht immer eine Akzeptanz für eine Sprachbedienung in einem Haushalt gegeben.

Das Ul kann mit dem hier vorgestellten Ansatz vorteilhafterweise auf ein beliebiges vernetzbares Gerät übertragen werden, im Besonderen auf ein anderes Hausgerät oder auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Die Smart Watch wird meist bereits am Handgelenk getragen und der Nutzer kann einfach und bequem das Ul von einem Ort zu einem anderen Ort tragen. Bei mehreren Mitgliedern in einem Haushalt kann jedes Mitglied des Haushalts über jeweils ein Wearable ein Geräte-Ul zu einem anderen Display mitnehmen und übertragen.

Wearables wie zum Beispiel Smart Watches verbreiten sich immer mehr. Durch ein Tragen einer Smart Watch an einem Handgelenk ist dieses Wearable nahezu immer präsent. Auch bei schmutzigen Händen kann damit eine einfache Handgeste ausgeführt werden. Die Smart Watch an ein Hausgerät zu halten, ist intuitiv und einfach. Es erfordert im Normalfall keinen mentalen Aufwand und ist daher nutzerfreundlich. Wenn der Nutzer die Smart Watch an das Hausgerät hält, ist der Wunsch, das Ul mitzunehmen, robust und einfach erkannt. Das Ul kann so auf ein beliebiges vernetzbares Gerät übertragen werden, im Besonderen auf ein anderes Hausgerät oder auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Während des Kochprozesses kann man auch mit schmutzigen Händen ein Hausgeräte-Ul komfortabel auf das smarte Display holen, ohne das smarte Display selbst zum Hausgerät mitnehmen zu müssen, um es an das Hausgerät zu halten. Die Smart Watch wird meist bereits am Handgelenk getragen und der Nutzer kann einfach und bequem das UI von einem Ort zu einem anderen Ort tragen. Der Nutzer spart sich den Aufwand seine Hände waschen zu müssen, durch ein Menü zu navigieren, um ein vernetztes Gerät auszuwählen, oder ein Sprachkommando korrekt aufzusagen. Auch ein Einsatz von Sensorik zur Erkennung von Handgesten, welche insbesondere einem Wunsch einer Ul-Übertragung entsprechen sollen, fällt weg. Bei mehreren Mitgliedern in einem Haushalt kann jedes Mitglied des Haushalts über jeweils ein Wearable ein Geräte-Ul zu einem anderen Display mitnehmen und übertragen.

Auf diese Weise kann mit dem hier vorgestellten Ansatz ein verbessertes Ul des Hausgerätes geschaffen werden, wobei das Ul bequem und komfortabel auf ein anderes Gerätedisplay übertragen werden kann. Der hier vorgestellte Ansatz ermöglicht somit eine "vereinfachte Übertragung des Ul auf andere Geräte.

Ein Steuern eines Hausgerätes über ein anderes Gerät kann beispielsweise ebenfalls mit einem Smartphone und/oder einem Tablet über eine (zusätzliche) Applikation, auch App oder Anwendersoftware genannt, durchgeführt werden. Ein Mobilgerät - auch als mobiles Endgerät oder mobiles Gerät bezeichnet - kann beispielhaft über eine WLAN-Verbindung, vereinfacht WLAN, mit einem Hausgerät vernetzt sein, so dass hierüber per remote eine Steuerung durchgeführt werden kann. Unter einem Mobilgerät kann dabei beispielsweise ein Tablet oder ein Smartphone oder ein sogenanntes Wearable verstanden werden. Als Wearable kann hierbei ein kleiner, vernetzter Computer aufgefasst werden, der am Körper getragen wird, wie zum Beispiel eine Smart Watch, alternativ als Smartwatch bezeichnet. "Remote" bedeutet hier, dass Geräte miteinander verbunden sind, obwohl sie nicht direkt nebeneinander sind. Das UI ist dann ein angepasstes UI, nämlich jenes der App, mit zum Teil eingeschränkten Möglichkeiten.

In einer Variaten eines hier vorgestellten Ansatzes kann beispielsweise ein Hausgerät über ein anderes bzw. eine Anzeigeeinheit gesteuert werden können. Hierbei wird das Ul eines Hausgerätes mit großem Display genutzt, um ein anderes Hausgerät zu steuern. Die Geräte sind beispielhalber miteinander über WLAN oder Bluetooth vernetzt. Das zu steuernde Gerät kann über einen Menüpunkt ausgewählt werden, so dass das Ul des anderen Hausgerätes aufgerufen wird.

In einer Variante des hier vorgestellten Ansatzes kann über eine Nahfeld-Kommunikation (englisch "near field communication") - auch NFC oder NFC-Kommunikation genannt - ein UI eines Hausgerätes auf ein Smartphone oder Tablet gespiegelt und mitgenommen werden, indem der Nutzer ein mobiles Endgerät an eine Blende des Hausgerätes hält. Das Hausgerät lässt sich dann über das mobile Endgerät steuern.

Die vorstehend genannte Aufgabe lässt sich auch beispielsweise dadurch lösen, dass der Nutzer ein Mobilgerät wie beispielsweise ein sogenanntes Wearable, idealerweise eine an einem Handgelenk getragene Smart Watch, dazu nutzt, ein UI eines ersten Hausgerätes "mitzunehmen", um es auf ein anderes Gerätedisplay zu übertragen. Ähnlich wie bei einem anderen Ansatz kann dafür die NFC-Kommunikation genutzt werden. Der Nutzer hält beispielshalber die Smart Watch an eine Gerätefront des Hausgerätes, das er später bedienen möchte. Eine NFC-Schnittstelle des Hausgerätes erkennt das Wearable und damit einen Wunsch, das UI auf ein anderes Gerät zu übertragen. Eine dazu passende Information wird in einem Hausgerätenetzwerk oder auf der Smart Watch gespeichert. Der Nutzer kann nun zu dem Gerät gehen, auf dessen Display er das UI angezeigt haben möchte. Dazu hält er die Smart Watch an eine Gerätefront eines zweiten Gerätes. Dieses zweite Gerät erkennt die NFC-Kommunikation und die gespeicherte Information darüber, dass das UI des ersten Hausgerätes an diesem zweiten Gerät angezeigt werden soll.

Das besagte Wearable kann neben einer Smart Watch beispielsweise auch ein Ring sein, oder alternativ ein Armband, oder auch ein smartes Gerät (englisch Device) wie beispielhaft ein sogenanntes Tag, oder aber ein mobiles Endgerät. Eine Kommunikation kann neben NFC zum Beispiel auch über Bluetooth, WLAN, oder UWB durchgeführt werden. Wichtig ist, dass ein Wunsch, das UI zu übertragen, erkannt wird. Dies kann über die Nahfeldkommunikation am besten dadurch umgesetzt werden, dass der Nutzer das Wearable an das Hausgerät hält. Alternativ kann sich der Nutzer zur Kontexterkennung beispielhaft mit einer Routine, einem Sprachbefehl oder einem anderen Kriterium behelfen. Eine Routine kann dabei als ein kurzes Programm oder ein Teil eines Programms aufgefasst werden. Statt das Wearable an die Gerätefront zu halten, kann als eine weitere Möglichkeit auch eine bestimmte Handgeste ausgeführt werden. Eine derartige Geste kann durch das Wearable zum Beispiel über eine integrierte Sensorik, insbesondere durch einen Beschleunigungssensor, erkannt werden. Sensorik kann dabei als Teilgebiet der Messtechnik aufgefasst werden, welches sich bisweilen mit der Anwendung von Sensoren befasst. In der Sensorik eingesetzte Sensoren können mitunter verschiedene physikalische Werte oder Eigenschaften messen. Unter einem zur Sensorik zählenden Beschleunigungssensor kann hierbei ein Sensor oder ein Gerät zur Messung einer beschleunigten Bewegung eines Gegenstands, im vorliegenden Fall im Besonderen des Wearables, verstanden werden.

Wearables wie zum Beispiel Smart Watches verbreiten sich immer mehr. Durch ein Tragen einer Smart Watch an einem Handgelenk ist dieses Wearable nahezu immer präsent. Auch bei schmutzigen Händen kann damit eine einfache Handgeste ausgeführt werden. Die Smart Watch an ein Hausgerät zu halten, ist intuitiv und einfach. Es erfordert im Normalfall keinen mentalen Aufwand und ist daher nutzerfreundlich. Wenn der Nutzer die Smart Watch an das Hausgerät hält, ist der Wunsch, das UI mitzunehmen, robust und einfach erkannt. Das UI kann so auf ein beliebiges vernetzbares Gerät übertragen werden, im Besonderen auf ein anderes Hausgerät oder auf ein smartes Display. Das smarte Display kann beispielsweise ein Smartphone oder ein Tablet sein, welches zum Beispiel bereits zu Beginn eines Kochprozesses auf einem Tisch, einem Tresen oder einer Arbeitsplatte positioniert wurde. Während des Kochprozesses kann man auch mit schmutzigen Händen ein Hausgeräte-Ul komfortabel auf das smarte Display holen, ohne das smarte Display selbst zum Hausgerät mitnehmen zu müssen, um es an das Hausgerät zu halten. Die Smart Watch wird meist bereits am Handgelenk getragen und der Nutzer kann einfach und bequem das UI von einem Ort zu einem anderen Ort tragen. Der Nutzer spart sich den Aufwand seine Hände waschen zu müssen, durch ein Menü zu navigieren, um ein vernetztes Gerät auszuwählen, oder ein Sprachkommando korrekt aufzusagen. Auch ein Einsatz von Sensorik zur Erkennung von Handgesten, welche insbesondere einem Wunsch einer Ul-Übertragung entsprechen sollen, fällt weg. Bei mehreren Mitgliedern in einem Haushalt kann jedes Mitglied des Haushalts über jeweils ein Wearable ein Geräte-Ul zu einem anderen Display mitnehmen und übertragen.

Die mit Varianten des hier vorgestellten Ansatzes erreichbaren Vorteile lasen sich in einer hohen Nutzerfreundlichkeit, Einfachheit, bequemen Ausführbarkeit, einer komfortablen, intuitiven und praktischen Bedienbarkeit und einer vielseitigen Einsetzbarkeit zusammenfassen. Zugleich funktioniert der hier vorgestellte Ansatz drahtlos, sodass keine störenden Kabel verwendet werden müssen. Auch können mobile Geräte verwendet werden, z. B. um während eines Garprozesses in einen anderen Raum gehen zu können oder dass eine auch kurzfristige Übertragung eines Hausgeräte-Ul während eines Kochprozesses möglich ist. Auch braucht keine Auswahl in einem Display-Menü und keine keine Sprachbedienung erfolgen.

Vorteilhaft ist auch, dass Wearables als Mobilgeräte mittlerweile verbreitet sind und meist bereits am Handgelenk getragen werden, sodass Wearables nahezu immer präsent sind. Auch kann eine Bedienung auch mit schmutzigen Händen und/oder durch einfache Handgeste, erfolgen. Auch ist es intuitiv und einfach die Smart Watch an ein Hausgerät zu halten, sodass im Normalfall kein mentaler Aufwand notwendig ist. Der Wunsch des Nutzers lässt sich robust und einfach erkennen. Auch ist das Ul auf ein beliebiges vernetzbares Gerät übertragbar und das Ul ist auf ein anderes Hausgerät oder auf ein smartes Display, beispielsweise ein Smartphone oder ein Tablet, übertragbar. Zugleich ist eine solche Variaten komfortabel, zum Beispiel während eines Kochprozesses, sodass der Nutzer das smarte Display nicht zum Hausgerät mitnehmen muss. Der Nutzer muss das smarte Display nicht an das Hausgerät halten, sondern kann einfach und bequem das UI von einem Ort zu einem anderen Ort tragen, sodass kein Aufwand fürs Händewaschen und keine Navigation in einem Menü erforderlich ist. Auch braucht kein (umständliches, unpraktisches oder aufwendiges) Sprachkommando gegeben werden und es ist keine (bzw. wenig zuverlässige) Sensorik erforderlich. Auch ist der hier vorgestellte Ansatz für mehrere Mitglieder in einem Haushalt geeignet / umsetzbar.

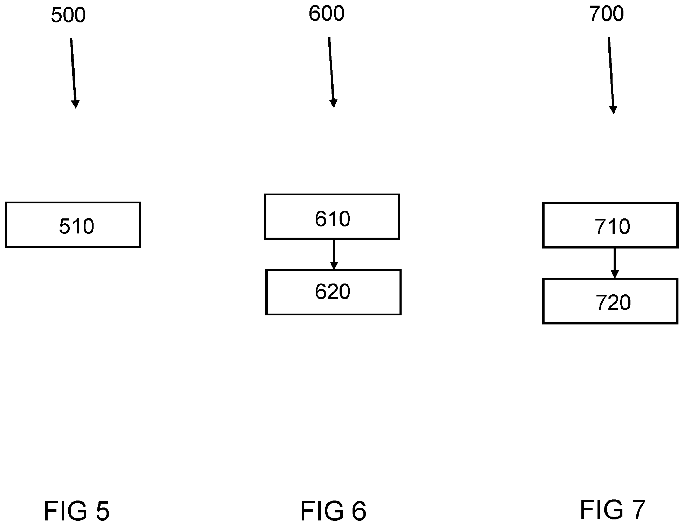

Figur 5 zeigt ein Ablaufdiagramm eines Ausführungsbeispiels des hier vorgestellten Verfahrens 500 zum Übertragen von Benutzerschnittstellendaten von einem Hausgerät an ein Mobilgerät. Das Verfahren 500 umfasst einen Schritt 510 des Ausgebens der Benutzerschnittstellendaten an das Mobilgerät. Dabei repräsentieren die Benutzerschnittstellendaten zumindest eine Betriebsinformation des Hausgerätes und/oder eine Information über eine Anordnung von auf einer Anzeigeeinheit anzuzeigenden Symbolen. Die Benutzerschnittstellendaten werden mithin von dem Hausgerät an das Mobilgerät übertragen.

Figur 6 zeigt ein Ablaufdiagramm eines Ausführungsbeispiels des hier vorgestellten Verfahrens 500 zum Transferieren von Benutzerschnittstellendaten von einem Hausgerät an eine Anzeigeeinheit. Das Verfahren 600 umfasst einen Schritt 610 des Einlesens der Benutzerschnittstellendaten von dem Hausgerät in ein Mobilgerät eines Nutzers. Hierbei repräsentieren die Benutzerschnittstellendaten zumindest eine Betriebsinformation des Hausgerätes und/oder eine Information über eine Anordnung von auf der Anzeigeeinheit anzuzeigenden Symbolen. Das Verfahren 600 umfasst weiterhin einen Schritt 620 des Ausgebens der Benutzerschnittstellendaten von dem Mobilgerät an die Anzeigeeinheit. Die Benutzerschnittstellendaten werden demnach von dem Hausgerät an die Anzeigeeinheit transferiert.

Figur 7 zeigt ein Ablaufdiagramm eines Ausführungsbeispiels des hier vorgestellten Verfahrens 700 zum Ausgeben von Benutzerschnittstellendaten über eine Anzeigeeinheit. Das Verfahren 700 umfasst einen Schritt 710 des Einlesens der Benutzerschnittstellendaten von dem Mobilgerät des Nutzers in die Anzeigeeinheit. Dabei repräsentieren die Benutzerschnittstellendaten zumindest eine Betriebsinformation des Hausgerätes und/oder eine Information über eine Anordnung von auf der Anzeigeeinheit anzuzeigenden Symbolen. Das Verfahren 700 umfasst ferner einen Schritt 720 des Anzeigens der Betriebsinformation des Hausgerätes und/oder der Anordnung von anzuzeigenden Symbolen auf der Anzeigeeinheit. Die Benutzerschnittstellendaten werden mithin über eine Anzeigeeinheit ausgegeben.

Der vorgeschlagene Ansatz kann insbesondere in einem Gerät umgesetzt werden, für welches ein Bedienen über ein externes UI sinnvoll sein kann.

## Patentansprüche

1. Verfahren (500) zum Übertragen von Benutzerschnittstellendaten (105) von einem Hausgerät (125) an ein Mobilgerät (115) eines Nutzers (100), wobei das Verfahren (500) den folgenden Schritt umfasst:
- Ausgeben (510) der Benutzerschnittstellendaten (105) an das Mobilgerät (115), wobei die Benutzerschnittstellendaten (105) zumindest eine Betriebsinformation des Hausgerätes (125) und/oder eine Information über eine Anordnung von auf einer Anzeigeeinheit (210) anzuzeigenden Symbolen repräsentiert, um die Benutzerschnittstellendaten (105) von dem Hausgerät (125) an das Mobilgerät (115) zu übertragen.

2. Verfahren (500) gemäß Anspruch 1, bei dem im Schritt (510) des Ausgebens die Benutzerschnittstellendaten (105) drahtlos ausgegeben werden.

3. Verfahren (500) gemäß einem der vorangegangenen Ansprüche, bei dem im Schritt (510) des Ausgebens die Information zu den auf der Anzeigeeinheit (210) anzuzeigenden Symbolen eine Information zu aktuellen Betriebsparametern des Hausgerätes (100) repräsentiert.

4. Verfahren (500) gemäß einem der vorangegangenen Ansprüche, das ferner einen Schritt des Empfangens einer Datenanforderung (250) von der Anzeigeeinheit (210) und einen Schritt des Bereitstellens zumindest eines Betriebsparameters (260) des Hausgerätes (125) an die Anzeigeeinheit (210) aufweist, ansprechend auf die empfangene Datenanforderung (250).

5. Verfahren (600) zum Transferieren von Benutzerschnittstellendaten (105) von einem Hausgerät (125) an eine Anzeigeeinheit (210), wobei das Verfahren (600) die folgenden Schritte aufweist:
- Einlesen (610) der Benutzerschnittstellendaten (105) von dem Hausgerät (125) in ein Mobilgerät (115) eines Nutzers (100), wobei die Benutzerschnittstellendaten (105) zumindest eine Betriebsinformation des Hausgerätes (100) und/oder eine Information über eine Anordnung von auf der Anzeigeeinheit (210) anzuzeigenden Symbolen repräsentiert; und
- Ausgeben (620) der Benutzerschnittstellendaten (105) von dem Mobilgerät (115) an die Anzeigeeinheit (210), um die Benutzerschnittstellendaten (105) von dem Hausgerät (125) an die Anzeigeeinheit (210) zu transferieren.

6. Verfahren (600) gemäß Anspruch 5, bei dem im Schritt (610) des Einlesens zumindest weitere Benutzerschnittstellendaten (105`) von zumindest einem weiteren Hausgerät (300) in das Mobilgerät (115) des Nutzers (100) eingelesen werden, wobei die weiteren Benutzerschnittstellendaten (105`) zumindest eine Betriebsinformation des weiteren Hausgerätes (300) und/oder eine Information über eine Anordnung von auf der Anzeigeeinheit (210) anzuzeigenden weiteren Symbolen repräsentieren und wobei im Schritt (620) des Ausgebens die Benutzerschnittstellendaten (105) und/oder die weiteren Benutzerschnittstellendaten (105`) von dem Mobilgerät (115) an die Anzeigeeinheit (210) ausgegeben werden.

7. Verfahren (600) gemäß Anspruch 6, bei dem im Schritt (620) des Ausgebens ansprechend auf ein eingelesenes Auswahlsignal die Benutzerschnittstellendaten (105) oder die weiteren Benutzerschnittstellendaten (105`) ausgegeben werden.

8. Verfahren (600) gemäß einem der Ansprüche 5 bis 7, wobei im Schritt (620) des Ausgebens die Benutzerschnittstellendaten (105) an eine in dem Mobilgerät (115) integrierte Anzeigeeinheit (210) ausgegeben werden.

9. Verfahren (700) zum Ausgeben von Benutzerschnittstellendaten (105) über eine Anzeigeeinheit (210), wobei das Verfahren (700) die folgenden Schritte aufweist:
- Einlesen (710) der Benutzerschnittstellendaten (105) von dem Mobilgerät (115) des Nutzers (100) in die Anzeigeeinheit (210), wobei die Benutzerschnittstellendaten (105) zumindest eine Betriebsinformation des Hausgerätes (125) und/oder eine Information über eine Anordnung von auf der Anzeigeeinheit (210) anzuzeigenden Symbolen repräsentiert; und
- Anzeigen (720) der Betriebsinformation des Hausgerätes (125) und/oder der Anordnung von anzuzeigenden Symbolen auf der Anzeigeeinheit (210).

10. Verfahren (700) gemäß Anspruch 9, das ferner einen Schritt (710) des Ausgebens einer Datenanforderung (250) von der Anzeigeeinheit (210) an das Hausgerät (125) aufweist, wobei im Schritt (720) des Anzeigens zumindest ein von dem Hausgerät (125) ansprechend auf die Datenanforderung (250) ausgegebener Betriebsparameter (260) auf der Anzeigeeinheit (210) angezeigt wird.

11. Verfahren (700) gemäß einem der Ansprüche 9 oder 10, bei dem im Schritt (720) des Ausgebens die Betriebsinformation des Hausgerätes (125) und/oder der Anordnung von anzuzeigenden Symbolen auf einer in einem weiteren Hausgerät (300) integrierten Anzeigeeinheit (210) angezeigt wird oder werden.

12. Verfahren (500, 600, 700) zum Ausgeben von Benutzerschnittstellendaten (105) eines Hausgeräts (125) auf einer Anzeigeeinheit (210), wobei das Verfahren (500, 600, 700) die folgenden Schritte aufweist:
- Ausgeben (510) der Benutzerschnittstellendaten (105) an ein Mobilgerät (115) eines Nutzers (100), wobei die Benutzerschnittstellendaten (105) zumindest eine Betriebsinformation des Hausgerätes (125) und/oder eine Information über eine Anordnung von auf der Anzeigeeinheit (210) anzuzeigenden Symbolen repräsentieren;
- Einlesen (610) der Benutzerschnittstellendaten (105) von dem Hausgerät (125) in das Mobilgerät (115);
- Ausgeben (620) der Benutzerschnittstellendaten (105) von dem Mobilgerät (125) an die Anzeigeeinheit (210), und
- Anzeigen (720) der Betriebsinformation des Hausgerätes (100) und/oder der Anordnung von anzuzeigenden Symbolen durch die Anzeigeeinheit (210).

13. Steuereinheit (110, 130, 215), die ausgebildet ist, um die Schritte (510, 610, 620, 710, 720) des Verfahrens (500, 600, 700) gemäß einem der vorangegangenen Ansprüche 1 bis 4 oder 5 bis 8 oder 9 bis 12 in entsprechenden Einheiten (120, 135, 140, 200, 225) auszuführen und/oder anzusteuern.

14. Hausgerät (125) mit einer Steuereinheit (110, 130, 215) gemäß Anspruch 13.

15. Computer-Programmprodukt mit Programmcode zur Durchführung des Verfahrens (500, 600, 700) nach einem der Ansprüche 1 bis 12, wenn das Computer-Programmprodukt auf einer Steuereinheit (110, 130, 215) gemäß Anspruch 13 ausgeführt wird.
